(19) **Europäisches Patentamt / European Patent Office / Office européen des brevets**

(11) **EP 1 927 465 B1**

(12) **EUROPEAN PATENT SPECIFICATION**

(45) Date of publication and mention of the grant of the patent:
**18.11.2015 Bulletin 2015/47**

(21) Application number: **06798102.7**

(22) Date of filing: **19.09.2006**

(51) Int Cl.:
***B32B 9/00*** (2006.01)

(86) International application number:
**PCT/JP2006/318491**

(87) International publication number:
**WO 2007/034773 (29.03.2007 Gazette 2007/13)**

(54) **LAMINATED FILM HAVING GAS BARRIER CHARACTERISTICS**

LAMINIERTE FOLIE MIT GASSPERREIGENSCHAFTEN

FILM STRATIFIÉ À PROPRIÉTÉ DE BARRIÈRE CONTRE LES GAZ

(84) Designated Contracting States:
**CH DE LI**

(30) Priority: **20.09.2005 JP 2005271599**

(43) Date of publication of application:
**04.06.2008 Bulletin 2008/23**

(73) Proprietor: **MITSUBISHI PLASTICS, INC.**
**Chiyoda-ku,**
**Tokyo 100-0005 (JP)**

(72) Inventors:
• **YOSHIDA, Shigenobu**
  **Ushiku-shi**
  **Ibaraki 300-1201 (JP)**
• **OKAWARA, Chiharu**
  **Ushiku-shi**
  **Ibaraki 300-1201 (JP)**
• **TAKEMURA, Motoyoshi**
  **Ushiku-shi**
  **Ibaraki 300-1201 (JP)**
• **HACHISUKA, Tooru**
  **Ushiku-shi**
  **Ibaraki 300-1201 (JP)**

(74) Representative: **Gille Hrabal**
**Brucknerstrasse 20**
**40593 Düsseldorf (DE)**

(56) References cited:
**JP-A- 08 318 590      JP-A- 10 217 380**
**JP-A- 10 230 558      JP-A- 2004 114 645**
**JP-A- 2004 345 223    JP-A- 2005 212 146**
**JP-A- 2005 212 229**

• **DATABASE WPI Week 200378 Thomson Scientific, London, GB; AN 2003-836824 XP002674183, & JP 2003 181974 A (TOPPAN PRINTING CO LTD) 3 July 2003 (2003-07-03)**

Remarks:
The file contains technical information submitted after the application was filed and not included in this specification

**Description**

TECHNICAL FIELD

The present invention relates to a laminated film excellent in gas barrier performance.

BACKGROUND ART

Conventionally, a gas barrier plastic film including a plastic film as a base material and an inorganic thin film formed on the surface thereof is widely used as a wrapping material for articles which requires blocking of various gases such as water vapor and oxygen, for example, wrapping materials for preventing deterioration of food, industrial goods, drugs, and the like. In addition to the wrapping use, in recent years, new use of the gas barrier plastic film as a transparent electroconductive sheet used for liquid crystal display devices, solar cells, electromagnetic wave shields, touch panels, EL substrates, color filters, and the like is attracting attention.

With various aims, various improvements have been investigated with respect to the gas barrier plastic film formed of the inorganic thin film described above. For example, from the viewpoint of transparency or gas barrier performance, there have been disclosed a gas barrier film in which a metal oxide layer, a resin, and a metal oxide layer are successively laminated in the stated order on a plastic film, in which the total light transmittance is 85% or more, the decreasing rate of both the oxygen permeability and the water vapor permeability after immersed in ethyl acetate for 1 minute is 20% or lower, and both the oxygen permeability and the water vapor permeability are 1 or less (see Patent Document 1). In addition, in a barrier film a metal oxide layer and an organic layer are successively and alternately laminated on a transparent plastic film so as to prevent and suppress damage to a metal oxide, the difference in the solubility parameter between the organic layer and the transparent plastic film which are adjacent to each other with the metal oxide layer interposed therebetween is 1.0 or more (see Patent Document 2).

The disclosure of Patent Document 3 relates to a laminate with gas barrier properties. The film with gas barrier properties is a silicon nitride or oxidized silicon nitride film.

The Patent Document 4 A teaches the presence of a layer of titanium oxide as an anchor coat layer. The thickness of this layer of titanium oxide is defined to be 10 to 500 nm.

However, the above-mentioned films show some improvements in the target property of each film, but the films are not sufficient in the gas barrier performance, adhesive strength between constitutional layers of a laminated film, etc. Thus, the improvements in the above-mentioned points have been desired.

Patent Document 1: JP 2003-71968 A

Patent Document 2: JP 2003-231202 A

Patent Document 3: JP 2004-114645 A

Patent Document 4: JP 2004-345223 A

DISCLOSURE OF THE INVENTION

PROBLEMS TO BE SOLVED BY THE INVENTION

It is an object of the present invention to provide a laminated film which exhibits high gas barrier performance immediately after the production, and has excellent adhesive strength between constitutional layers while maintaining the excellent gas barrier performance.

MEANS FOR SOLVING THE PROBLEMS

The present invention relates to:

(1) a gas barrier laminated film, comprising, on an inorganic thin film formed on at least one side of a base film, at least one constitutional unit layer containing a 0.1 to 5 nm thick anchor coat layer and an inorganic thin film formed on the anchor coat layer, wherein the anchor coat layer comprises a polyisocyanate curing agent and at least one resin selected from the group consisting of a polyester-based resin, an urethane-based resin, an acryl-based resin, a nitrocellulose-based resin, a silicon-based resin, and an isocyanate-based resin, or at least one member selected from the group consisting of chromium, a titanium oxide, and a silicon nitride, and wherein the inorganic thin film comprises a silicon oxide or an aluminum oxide; and

(2) a method for producing a gas barrier laminated film, comprising the steps of (A) forming an inorganic thin film on at least one side of a base film by a deposition method; and (B) forming at least one constitutional unit layer which is obtained by successively forming a 0.1 to 5 nm thick anchor coat layer and an inorganic thin film formed by a deposition method on the inorganic thin film, wherein the anchor coat layer comprises a polyisocyanate curing agent and at least one resin selected from the group consisting of a polyester-based resin, an urethane-based resin, an acryl-based resin, a nitrocellulose-based resin, a silicon-based resin, and an isocyanate-based resin, or at least one member selected from the group consisting of chromium, a titanium oxide, and a silicon nitride, and wherein the inorganic thin film comprises a silicon oxide or an aluminum oxide.

EFFECTS OF THE INVENTION

The present invention provides a laminated film which exhibits high gas barrier performance immediately after the production and has excellent adhesive strength between constitutional layers of the laminated film while maintaining the excellent gas barrier performance.

BEST MODE FOR CARRYING OUT THE INVENTION

Hereinafter, the present invention will be described in detail.

As a base film for the gas barrier laminated film according to the present invention, a thermoplastic polymer film is preferable. Any resin which can be used for usual wrapping materials can be used as a raw material thereof without limitation. Specific examples include: polyolefins such as homopolymers or copolymers of ethylene, propylene, and butene; amorphous polyolefins such as cyclic polyolefin; polyesters such as polyethylene terephthalate and polyethylene-2,6-naphthalate; polyamides such as nylon 6, nylon 66, nylon 12, and copolymer nylon; polyvinyl alcohols; ethylene-vinyl acetate copolymer partial hydrolysates (EVOH); polyimides; polyetherimides; polysulfones; polyethersulfones; polyetheretherketones; polycarbonates; polyvinyl butyrals; polyarylates; fluororesins; acrylate resins; and biodegradable resins. Of those, polyesters, polyamides, polyolefins, and biodegradable resins are preferred from the viewpoints of film strength, cost, etc.

The aforementioned base film may contain known additives such as an antistatic agent, a light-blocking agent, a UV-absorber, a plasticizer, a lubricant, a filler, a colorant, a stabilizer, a cross-linking agent, an anti-blocking agent, and an antioxidant.

The thermoplastic polymer film used as the base film is produced through molding the aforementioned raw materials. When employed as the base material, the base film may be unstretched or stretched. The base film may be laminated with other plastic base materials. The base film can be produced through any of conventionally known methods. For example, a resin raw material is melted by means of an extruder and extruded through a circular die or T die set, followed by quenching, whereby an unstretched film which is virtually amorphous and non-oriented can be produced. The unstretched film is stretched in a film flow direction (longitudinal direction) or in the film flow direction and an orthogonal direction thereto (transverse direction) through a known method such as uniaxial stretching, tenter-based successive biaxial stretching, tenter-based simultaneous biaxial stretching, or tubular simultaneous biaxial stretching, whereby a film stretched at least in one axial direction can be produced.

The base film generally has a thickness of 5 to 500 $\mu$m, preferably 10 to 200 $\mu$m, from the viewpoints of mechanical strength, flexibility, transparency, etc., of the gas barrier laminated film base material of the present invention depending on the use of the base film. The base film also includes a sheet-like film having a large thickness. No particular limitation is imposed on the width and length of the film, and these dimensions may be appropriately selected in accordance with the use thereof.

Examples of the inorganic substance for forming the inorganic thin film provided on at least one surface of the base film include silicon oxides and aluminum oxides. In particular, silicon oxides or aluminum oxides are used in that high gas barrier performance can be consistently maintained. One kind of those inorganic substances may be used alone, or two or more kinds thereof may be used in combination.

As a method for producing the inorganic thin film, any methods such as a vapor deposition method and a coating method may be employed. Of those, the vapor deposition method is preferred in that a uniform thin film exhibiting high gas barrier performance can be produced. Examples of the vapor deposition methods include any of physical vapor deposition (PVD) and chemical vapor deposition (CVD), such as vacuum vapor deposition, ion plating, and sputtering.

The inorganic thin film generally has a thickness of 0.1 to 500 nm, preferably 0.5 to 40 nm. When the thickness falls within the above range, sufficient gas barrier performance can be attained, and the inorganic thin film has no cracks and peeled parts and also exhibits excellent transparency.

The gas barrier laminated film of the present invention has, on an inorganic thin film, at least one constitutional unit layer formed of a 0.1 to 5 nm thick anchor coat layer and an inorganic thin film formed on the anchor coat layer.

As the anchor coat layer forming the constitutional unit layer, a layer formed of at least one member selected from resins such as thermosetting resins and thermoplastic resins, metals, metal oxides, and metal nitrides can be used.

Any of solvent-soluble or water-soluble resins can be used as a resin such as a thermosetting resin and a thermoplastic resin forming the anchor coat layer. Specific examples of the resins include polyester-based resins, urethane-based resins, acryl-based resins, nitrocellulose-based resins, silicon-based resins, isocyanate group-containing resins. One kind of those resins may be used alone, or two or more kinds thereof may be used in combination.

In the present invention, from the viewpoint of gas barrier performance, at least one kind of resins selected from the group consisting of polyester-based resins, urethane-based resins, acryl-based resins, nitrocellulose-based resins, silicon-based resins, isocyanate group-containing resins, and their copolymers is used. Of those, polyester-based resins are preferable.

The polyester-based resin used in the anchor coat layer can be obtained by reacting a polycarboxylic acid component and a polyalcohol component. Exemplified as the polycarboxylic acid component are terephthalic acid, isophthalic aicd, adipic acid, sebacic acid, azelaic acid, orthophthalic acid, diphenyl carboxylic acid, and dimethylphthalic acid. Exemplified as the polyalcohol component are ethylene glycol, 1,2-proylene glycol, 1,3-proylene glycol, 1,4-butanediol, diethylene glycol, neopentyl glycol, dipropylene glycol, 1,6-hexanediol, and bisphenol A.

In view of the gas barrier performance and adhesion, the number average molecular weight of the polymer forming the resin is 3,000 to 30,000, preferably 4,000 to 28,000, and more preferably 5,000 to 25,000.

The anchor coat layer preferably includes a silane coupling agent from the viewpoint of improving the interlayer adhesion. Examples of the silane coupling agent include: epoxy group-containing silane coupling agents such as β-(3,4-epoxycyclohexyl)ethyltrimethoxy silane, γ-glycidoxypropylmethyl diethoxy silane, and γ - glycidoxypropyl trimethoxy silane; amino group-containing silane coupling agents such as γ - aminopropyl trimethoxy silane, N-β(aminoethyl) γ - aminopropylmethyl diethoxy silane, N-β (aminoethyl) γ-aminopropyl trimethoxy silane, and N-β(aminoethyl) γ - aminopropyl triethoxy silane; and mixtures thereof. From the viewpoint of the interlayer adhesion, γ-glycidoxypropyl trimethoxy silane and γ-aminopropyl trimethoxy silane are exemplified for preferable silane coupling agents. Those silane coupling agents are used alone or in combination of two or more.

In view of adhesion, the silane coupling agent is contained in an amount of preferably 0.1 to 80 mass% and more preferably 1 to 50 mass% with respect to the resin which forms the anchor coat layer.

The anchor coat layer includes a curing agent. As the curing agent, polyisocyanates are chosen. Specific examples of the curing agent include: aliphatic polyisocyanates such as hexamethylene diisocyanate and dicyclohexylmethane diisocyanate; and aromatic polyisocyanates such as xylene diisocyanate, tolylene diisocyanate, diphenylmethane diisocyanate, polymethylene polyphenylene diisocyanate, tolydine diisocyanate, and naphthalene diisocyanate. In particular, a polyisocyanate having two or more functional groups is preferred in view of improving barrier performance.

The anchor coat layer can include known various additives. Examples of the additive include: polyalcohols such as glycerin, ethylene glycol, polyethylene glycol, and polypropylene glycol; an aqueous epoxy resin; lower alcohols such as methanol, ethanol, normal propanol, and isopropanol; ethers such as ethyleneglycol monomethyl ether, propyleneglycol monomethylether, propyleneglycol diethyl ether, and propyleneglycol monoethyl ether; esters such as propyleneglycol monoacetate and ethyleneglycol monoacetate; anantioxidant; a weathering stabilizer; a UV-absorber; an antistatic agent; a pigment; a dye; an antibacterial agent; a lubricant; an inorganic filler; an anti-blocking agent; and an adhesive agent.

As the metal forming the anchor coat layer, a substance contains at least one member selected from chromium, silicon nitrides, and titanium oxides from the above-mentioned viewpoints of gas barrier performance and adhesion.

In the above-mentioned constitutional unit layer, the upper limit of the thickness of the anchor coat layer is 5nm. The lower limit of the thickness of the anchor coat layer is 0.1nm, and preferably 0.5nm. When the thickness of the anchor coat layer is in the above-mentioned range, adhesion and the like are excellent. Thus, such thickness is preferable. From the above-mentioned viewpoints, the thickness of the anchor coat layer is 0.1 to 5nm. When the anchor coat layer is formed of a resin such as the thermosetting resin or the thermoplastic resin, the thickness of the anchor coat layer is 0.5 to 5nm. In order to improve water resistance and durability, the anchor coat layer can be subjected to crosslinking treatment by electron beam irradiation.

A known coating method is suitably employed as a method of forming the anchor coat layer comprising the resin such as the thermosetting resin and the thermoplastic resin. For example, any methods such as reverse roll coater, gravure coater, rod coater, air doctor coater, or coating methods using a spray or a brush can be employed. The coating may be performed by dipping a deposited film in a resin solution. After the coating, a solvent can be evaporated using known drying methods such as drying by heating including hot-air drying at a temperature of about 80 to 200°C and hot roll drying, and infrared drying. Thus, a laminated film having a uniform coating layer is obtained.

As the method of forming the anchor coat layer containing at least one member selected from chromium, titanium oxide, and silicon nitride, any one of a deposition method, a coating method, etc., can be used. The deposition method is preferable in the point that a uniform thin film having high adhesion can be obtained. As the deposition method, both a method which can be used for the formation of the inorganic thin film and the similar method can be used.

In the above-mentioned constitutional unit layer, an inorganic thin film is formed on the anchor coat layer. As the inorganic thin film formed on the anchor coat layer, a film similar to the inorganic thin film formed on the base film can be used. The gas barrier laminated film of the present invention contains, on the inorganic thin film formed on the base film, at least one constitutional unit layer containing the anchor coat layer and the inorganic thin film formed on the anchor coat layer. From the viewpoint of productivity, the gas barrier laminated film of the present invention contains preferably one to three constitutional unit layers mentioned above on the inorganic thin film formed on the base film, and more preferably one or two constitutional unit layers. Here, when referring to the number of layers of the constitutional unit layer, a unit containing one anchor coat layer and one inorganic thin film is referred to as one constitutional unit layer.

From the similar viewpoint, as the lamination of the constitutional unit layers, it is preferable that two or more constitutional unit layers be successively and repeatedly laminated, and it is more preferable that an anchor coat layer of another constitutional unit layer is laminated on the side of the inorganic thin film of the first constitutional unit layer- In the present invention, another layer is optionally inserted between the constitutional unit layers.

In the present invention, in order to improve adhesion between the base film and the inorganic thin film, it is preferable to form the anchor coat layer by applying an anchor coating agent to between the base film and the inorganic thin film. As the anchor coating agent, an agent similar to the agent used for the formation of the anchor coat layer forming the above-mentioned constitutional unit layer can be used.

The thickness of the anchor coat layer formed on the base film is usually 0.1 to 5,000nm, preferably 1 to 2,000nm, andmorepreferably 1 to 1,000nm. When the thickness of the anchor coat layer is in the above-mentioned range, sliding properties are excellent, the anchor coat layer hardly separates from the base film due to the internal stress of the anchor coat layer itself, a uniform thickness can be maintained, and Interlayer adhesion is excellent.

In order to improve coating properties and adhesiveness of the anchor coating agent to the base film, the base film may be subjected to surface treatments such as a common chemical treatment and discharge treatment before the coating of the anchor coating agent.

It is preferable for the gas barrier laminated film of the present invention to have a protection layer as a top layer on a side having the constitutional unit layer. As a resin forming the protection layer, both solvent-soluble resins and water-soluble resins can be used. To be specific, polyester-based resins, urethane-based resins, acryl-based resins, polyvinyl alcohol-based resins, ethylene-unsaturated carboxylic acid copolymer resins, ethylenevinyl alcohol-based resins, vinyl-modified resins, nitrocellulose-based resins, silicon-based resins, isocyanate-based resins, epoxy-based resins, oxazoline group-containing resins, styrene-modified resins, silicon-modified resins, alkyl titanate, etc., can be used singly or in combination of two or more. As the protection layer, in order to improve barrier properties, abrasion properties, and sliding properties, it is preferable to use a layer obtained by mixing at least one type of inorganic particle selected from a silica sol, an alumina sol, a granular inorganic filler, and a laminar inorganic filler in the at least one resin or to use a layer containing a resin containing inorganic particles which is formed by polymerizing raw materials of the above-mentioned resin in the presence of the inorganic particles.

As a resin forming the protection layer, the above-mentioned water-soluble resin is preferable from the viewpoint of improving gas barrier performance of the inorganic thin film. Preferable as the water-soluble resin are polyvinyl alcohol-based resins, ethylenevinyl alcohol-based resins, or ethylene-unsaturated carboxylic acid copolymer resins.

Hereinafter, the above-mentioned resin layers will be described.

Polyvinyl alcohol can be obtained by known methods, and can be usually obtained by saponifying a polymer of vinyl acetate. Polyvinyl alcohol whose degree of saponification is 80% or more can be used. The degree of saponification is preferably 90% or more, more preferably 95% or more, and particularly preferably 98% or more from the viewpoint of gas barrier performance.

The average degree of polymerization is usually 500 to 3,000, and, from the viewpoints of gas barrier performance and stretching properties, is preferably 500 to 2,000. As polyvinyl alcohol, a substance obtained by copolymerizing ethylene at a proportion of 40% or less can be used. An aqueous liquid of polyvinyl alcohol can be prepared by, for example, supplying polyvinyl alcohol resin while stirring in ordinary temperature water, increasing the temperature, and stirring the resultant at 80 to 95°C for 30 to 60 minutes.

An ethylene-unsaturated carboxylic acid copolymer is a copolymer of ethylene with unsaturated carboxylic acid such as acrylic acid, methacrylic acid, ethacrylic acid, fumaric acid, maleic acid, itaconic acid, monomethyl maleate, monoethyl maleate, maleic anhydride, and itaconic anhydride. Of those, a copolymer of ethylene with acrylic acid or methacrylic acid is preferable from the viewpoint of general-purpose property. The ethylene-unsaturated carboxylic acid copolymer may arbitrarily contain another monomer.

The content of ethylene in the ethylene-unsaturated carboxylic acid copolymer is preferably 65 to 90 mass%, and more preferably 70 to 85 mass%, and the content of the unsaturated carboxylic acid component is preferably 10 to 35 mass%, and more preferably 15 to 30 mass% from the viewpoints of general-purpose property and plasticity. The melt flow rate (MFR) under 2,160 g load at 190°C of the ethylene-unsaturated carboxylic acid copolymer is preferably 30 to 2,000 g/10 minutes, more preferably 60 to 1, 500 g/10 minutes from the viewpoint of bending resistance of a film.

The number average molecular weight is preferably in the range of 2,000 to 250,000.

In the present invention, from the viewpoints of gas barrier performance, interlayer adhesion, etc., it is preferable for the above-mentioned ethylene-unsaturated carboxylic acid copolymer to contain its partially neutralized substances. The degree of neutralization of the partially neutralized substances is preferably 20 to 100%, more preferably 40 to 100%, and particularly preferably 60 to 100% from the viewpoint of gas barrier performance. The degree of neutralization can be calculated according to the following equation.

$$\text{Degree of neutralization} = (A/B) \times 100(\%)$$

A: Number of moles of a neutralized carboxyl group in 1g of partially neutralized ethylene-unsaturated carboxylic acid copolymer

B: Number of moles of a carboxyl group in 1g of ethylene-unsaturated carboxylic acid copolymer before partial neutralization

Note that, for convenience, in the case of an aqueous liquid, the degree of neutralization can be calculated by defining the above A as a number obtained by (number of metal ions in a solvent) $\times$ (valence of the metal ions) and defining the above B as the number of carboxyl groups in the ethylene-unsaturated carboxylic acid copolymer before partial neutralization.

From the viewpoint of gas barrier performance, it is preferable to use the ethylene-unsaturated carboxylic acid copolymer in the form of an aqueous liquid containing the above-mentioned copolymer and an aqueous medium containing ammonia, sodium hydroxide, potassium hydroxide, lithium hydroxide, etc. An aqueous liquid containing the aqueous medium in such a manner that the degree of neutralization calculated with the above-mentioned equation is 20 to 100%, furthermore, 40 to 100%, with respect to the total number of moles of the carboxyl group contained in the ethylene-unsaturated carboxylic acid copolymer is preferably used.

In the present invention, the above protection layer may be formed of one kind of the above resins, and two or more kinds thereof may also be used in combination for the protection layer.

Inorganic particles can be added to the above-mentioned protection layer from the viewpoints of improving barrier performance and adhesion.

There is no limitation on inorganic particles used for the present invention, and, for example, any of known substances such as an inorganic filler, an inorganic laminar compound, and a metal oxide sol can be used.

Examples of the inorganic filler include oxides, hydroxides, hydrates, and carbohydrates of silicon, aluminum, magnesium, calcium, potassium, sodium, titanium, zinc, and iron, and their mixtures and composites.

Examples of the inorganic laminar compound include clay minerals typified by a kaolinite group, a smectite group, and a mica group. Of those, montmorillonite, hectorite, saponite, and the like may be used.

Examples of the metal oxide sols include metal oxides of silicon, antimony, zirconium, aluminium, cerium, titanium, and the like, and their mixtures. Of those, substances containing a reactive functional group that can be subjected to hydrolysis condensation, such as hydroxyl groups and alkoxy groups, are preferable from the viewpoints of hot water resistance and gas barrier performance. In particular, substances having a silanol group in the reactive functional group in a proportion of 10 to 100 mol% and furthermore, 20 to 100 mol% are preferably used.

In the present invention, silica particles are preferably used from the viewpoints of general-purpose property and stability as the above-mentioned inorganic particles. The above-mentioned inorganic particles may be used alone, or two or more kinds thereof can be used in combination.

The average particle diameter of the inorganic particles has the lower limit of preferably 0.5nm and more preferably 1nm, and has the upper limit of preferably 2$\mu$m, more preferably 200nm, still more preferably 100nm, still more preferably 25nm, still more preferably 10nm, and further still more preferably 5nm from the viewpoints of hot water resistance and cohesive failure resistance. Specifically, the average particle diameter is preferably 0.5 to 2$\mu$m, more preferably 0.5 to 200nm, still more preferably 0.5 to 100nm, still more preferably 0.5 to 25nm, still more preferably 1 to 20nm, still more preferably 1 to 10nm, and further still more preferably 1 to 5nm.

A thickness of the protection layer is preferably 0.05 to 10$\mu$m and more preferably 0.1 to 3$\mu$m from the viewpoints of printing performance and workability. A known coating method is suitably employed as a method of forming the protection layer. For example, any methods such as reverse roll coater, gravure coater, rod coater, air doctor coater, and coating methods using a spray or a brush can be employed. The coating maybe per formed by dipping a deposited film in a resin solution for a protection layer. After the coating, water can be evaporated using known drying methods including drying by heating such as hot-air drying at a temperature of about 80 to 200°C and heat roll drying, and infrared drying. Thus, a laminated film having a uniform coating layer is obtained.

In view of gas barrier performance and adhesion, the following embodiments are preferably used in the gas barrier laminated film of the present invention.

(1) base film/AC/inorganic thin film/AC/inorganic thin film

(2) base film/AC/inorganic thin film/AC/inorganic thin film/AC/inorganic thin film

(3) base film/AC/inorganic thin film/AC/inorganic thin film/AC/inorganic thin film/AC/inorganic thin film

(4) base film/AC/inorganic thin film/AC/inorganic thin film/protection layer

(5) base film/AC/inorganic thin film/AC/inorganic thin film/AC/inorganic thin film/protection layer

(6) base film/AC/inorganic thin film/AC/inorganic thin film/AC/inorganic thin film/AC/inorganic thin film/protection layer

(7) base film/inorganic thin film/AC/inorganic thin film

(8) base film/inorganic thin film/AC/inorganic thin film/AC/inorganic thin film

(9) base film/inorganic thin film/AC/inorganic thin film/AC/inorganic thin film/AC/inorganic thin film

(10) base film/inorganic thin film/AC/inorganic thin film/protection layer

(11) base film/inorganic thin film/AC/inorganic thin film/AC/inorganic thin film/protection layer

(12) base film/inorganic thin film/AC/inorganic thin film/AC/inorganic thin film/AC/inorganic thin film/protection layer

(Note that AC denotes an anchor coat layer in the above embodiments.)

In the present invention, various gas barrier laminated films in which an additional constitutional layer is, as required, further laminated on the above-mentioned constitutional layer can be used according to the intended use.

According to a common embodiment, a gas barrier laminated film in which a plastic film is formed on the inorganic thin film or the protection layer is used for various applications. The thickness of the plastic film is selected from the range of usually 5 to 500$\mu$m and preferably 10 to 200$\mu$m according to the intended use from the viewpoints of mechanical strength, flexibility, transparency, etc., as the support of a laminated structure. The width and the length of the film are not limited, and can be suitably selected according to the intended use. For example, by using a heat-sealable resin for the surface of the inorganic thin film or the protection layer, heat sealing becomes possible, whereby the present invention can be used as various containers. Examples of the heat-sealable resin include known resins such as a polyethylene resin, a polypropylene resin, an ethylene-vinylacetate copolymer, an ionomer resin, an acryl-based resin, and a biodegradable resin.

Moreover, according to another embodiment of the gas barrier laminatedfilmdescribed above, a laminate inwhichaprinting layer is formed on the coated surface of the inorganic thin film or the protection layer and a heat-seal layer is further laminated thereon is mentioned. As a printing ink forming the printing layer, a printing ink containing a water-soluble and solvent-soluble resin can be used. Here, mentioned as a resin used for the printing ink are acryl-based resins, urethane-based resins, polyester-based resins, vinyl chloride-basedresins, vinyl acetate copolymer resins, or their mixtures. Further, to the printing ink, known additives such as antistatic agents, light blocking agents, UV-absorbers, plasticizers, lubricants, fillers, colorants, stabilizers, defoaming agents, cross-linking agents, anti-blocking agents, and antioxidants may be added.

There is no limitation on the printing method for preparing the printing layer, and known printing methods such as offset printing, gravure printing, and screen printing can be used. For drying the solvent after printing, known drying methods such as hot blow drying, hot roll drying, and infrared drying can be used.

Between the printing layer and the heat-seal layer, at least one layer of paper or a plastic film can be inserted. As the plastic film, a substance similar to the thermoplastic polymer film as a base film for use in the gas barrier laminated film of the present invention canbe used. In particular, from the viewpoint of obtaining sufficient rigidity and strength of a laminate, paper, a polyester resin, a polyamide resin, or a biodegradable resin is preferable.

In the present invention, after forming the anchor coat layer forming the constitutional unit layer, after forming the inorganic thin film forming the constitutional unit layer, or after forming the protection layer, it is preferable to perform heat treatment from the viewpoints of stabilizing gas barrier performance, film qualities, and coated layer qualities.

Conditions of the heat treatment vary depending on types, thicknesses, and the like of components forming a gas barrier laminated film. The heat treatment methods are not limited as long as a required temperature and time can be maintained. For example, there may be employed: a method of storing a film in an oven or a thermostat chamber whose temperature is set at a required temperature; a method of applying hot blow to a film; a method of heating a film with an infrared heater; a method of irradiating a film with light using a lamp; a method of directly providing heat to a film by bringing the film into contact with a hot roll or a hot plate; or a method of irradiating a film with a microwave. A film may be subjected to heat treatment after being cut to a dimension at which the handling thereof is facilitated, or a film roll may be subjected to heat treatment as it is. Insofar as a required time and a required temperature can be achieved, heating can be carried out during a production process by installing a heating device in a part of a film production apparatus such as a coater and a slitter.

The heat treatment temperature is not limited insofar as the temperature is equal to or lower than each melting point of a base material, a plastic film, and the like, which are to be used. The heat treatment temperature is preferably 60°C or more, and more preferably 70°C or more, considering the fact that a heat treatment time required for exhibiting a heat treatment effect can be suitably determined. The upper limit of the heat treatment temperature is usually 200°C, and preferably 160°C from the viewpoint of preventing deterioration in gas barrier performance due to thermal decomposition of components forming a gas barrier laminated film. The treatment time depends on a heat treatment temperature. The higher the treatment temperature is, the shorter the heat treatment time preferably is. For example, when the heat treatment temperature is 60°C, the treatment time is about 3 days to 6 months, when the heat treatment temperature is 80°C, the treatment time is about 3 hours to 10 days, when the heat treatment temperature is 120°C, the treatment time is about 1 hour to 1 day, and when the heat treatment temperature is 150°C, the treatment time is about 3 minutes to 60 minutes. The above-mentioned heat treatment temperatures and heat treatment times are merely guides, and the heat treatment temperatures and the heat treatment times can be suitably adjusted depending on types, thicknesses, and the like of the components forming a gas barrier laminated film.

The method for producing the gas barrier laminated film of the present invention includes: a step (A) of forming an inorganic thin film on at least one side of a base film by a deposition method; and a step (B) of successively forming, on the inorganic thin film formed on the base film, at least one constitutional unit layer containing a 0.1 to 5nm thick anchor coat layer and an inorganic thin film formed by a deposition method.

By the step (A) of forming the inorganic thin film on at least one side of the base film by a deposition method, a uniform thin film having high gas barrier performance can be obtained as described above. The base film, the inorganic thin film, and the deposition method are as described above.

Further, by the step (B) of forming, on the inorganic thin film side, a 0.1 to 5nm thick anchor coat layer on the inorganic thin film formed on the base film and forming an inorganic thin film on the anchor coat layer by a deposition method, adhesion between each layer in a multilayer deposition of the inorganic thin films can be improved. By further performing the above-mentioned procedure one more time, and preferably repeating the procedure 1 to 3 times, gas barrier performance can be improved. The anchor coat layer and the inorganic thin film, which form the constitutional unit layer in the above-mentioned procedure are as described above. By forming the anchor coat layer in such a manner as to have a thickness of 0.1 to 5nm, outstanding adhesion can be achieved.

EXAMPLES

Hereinafter, the present invention will be specifically described by way of the examples, but is not limited to the following examples. In the examples below, film evaluation methods are as follows.

<Water vapor permeability>

In accordance with the conditions stipulated in JIS Z0222 "Moisture permeability test for moisture-proof packaging container" and JIS Z0208 "Moisture permeability test for moisture-proof wrapping material (cup method)", water vapor permeability was determined through the following procedure.

In each analysis, a four-side-sealed bag was fabricated from two gas barrier laminated films having moisture permeation area of 10.0 cm x 10.0 cm, and about 20 g of calcium chloride anhydide serving as a hydroscopic agent was placed in the bag. The bag was placed in a thermo-hygrostat (40°C, RH: 90%), and weighed (precision: 0.1 mg) for 14 days at intervals of 48 hours or longer. A period of 14 days was selected, because weight is considered to increase at a constant rate within this period of time. Water vapor permeability was calculated from the following equation. Tables 1-1 and 1-2 show values of the water vapor permeability at the day 3.

$$\text{Water vapor permeability } (g/m^2/24\ hr) = (m/s)/t,$$

where parameters are as follows:

    m: increase in mass (g) between the last two measurements in the test;
    s: moisture permeation area ($m^2$); and
    t: duration (h)/24 (hr) between the last two measurements in the test.

<Interlayer adhesion>

In accordance with JIS Z1707, a laminated film was cut into a strip of 15 mm wide. An end part of the strip was partially peeled. T-type peeling was performed by subjecting the end part of the strip to a peel tester at a rate of 300 mm/minute to measure laminate strength (g/15 mm).

Example 1

A polyethylene terephthalate resin (hereinafter abbreviated as PET; "Novapex" manufactured by Mitsubishi Chemical Corporation) was melt-extruded to thereby form a sheet. By stretching the sheet in a longitudinal direction at a stretching temperature of 95°C at a stretching ratio of 3.3, and then stretching the sheet in a transverse direction at a stretching temperature of 110°C at a stretching ratio of 3.3, a 12μm thick biaxially stretched PET film was obtained. A mixture of an isocyanate compound ("Coronate L" manufactured by Nippon Polyurethane Industry Co., Ltd.) and a saturated polyester ("VYLON 300" manufactured by Toyobo Co., Ltd. and having number average molecular weight of 23,000) mixed at a mass ratio of 1:1 was coated on one surface of the film, followed by drying to form an anchor coat layer having a thickness of 10nm.

Subsequently, SiO was evaporated by a high frequency heating method under vacuum of $1 \times 10^{-5}$ Torr using a vacuum evaporator, thereby forming an about 20nm thick inorganic thin film on the anchor coat layer.

A mixture obtained by mixing an isocyanate compound ("Coronate L", manufactured by Nippon Polyurethane Industry Co., Ltd) with a saturated polyester ("VYLON 300", manufactured by Toyobo Co., Ltd.) in a mass ratio of 1:1 was coated onto the inorganic thin film side of the obtained inorganic thin film formed on the anchor coat layer and dried to form a 0.5nm thick anchor coat layer.

Subsequently, SiO was evaporated by a high frequency heating method under vacuum of $1 \times 10^{-5}$ Torr using a vacuum evaporator, thereby forming an about 20nm thick inorganic thin film on the anchor coat layer.

Further, on the surface having the inorganic thin film of the obtained film, a urethane-based adhesive ("AD900" and "CAT-RT85" manufactured by Toyo-Morton, Ltd. were mixed in a ratio of 10:1.5) was further coated, followed by drying, thereby forming an about 3μm thick adhesive resin layer. On the adhesive resin layer, a 60μm thick unstretched polypropylene film ("Pylen Film CT P1146" manufactured by Toyobo Co., Ltd.) was laminated to obtain a laminated film. The obtained laminated film was subjected to the above-mentioned evaluations. The results are shown in Table 1-1.

Example 2 (**not part of the invention**)

A laminated film was produced following the procedure of Example 1 except that the thickness of the anchor coat layer between the inorganic thin film layers was 10nm. The obtained laminated film was subjected to the above-mentioned evaluations. The results are shown in Table 1-1.

Example 3

A laminated film was produced following the procedure of Example 1 except for adding, to the mixture for forming the anchor coat layer between the inorganic thin film layers, a silane coupling agent ("SH6040", manufactured by Dow Corning Toray Silicone Co., Ltd.) in an amount of 5 mass% based on the solid content. The obtained laminated film was subjected to the above-mentioned evaluations. The results are shown in Table 1-1.

Example 4

A laminated film was produced following the procedure of Example 1 except for adding, to the mixture for forming the anchor coat layer between the inorganic thin film layers, a silane coupling agent ("SH6040", manufactured by Dow Corning Toray Silicone Co., Ltd.) in an amount of 50 mass% based on the solid content. The obtained laminated film was subjected to the above-mentioned evaluations. The results are shown in Table 1-1.

Example 5

A laminated film was produced following the procedure of Example 1 except for forming no anchor coat layer on the PET film as the base film. The obtained laminated film was subjected to the above-mentioned evaluations. The results are shown in Table 1-1.

Example 6

A laminated film was produced following the procedure of Example 1 except for further forming successively an anchor coat layer and an inorganic thin film, which are similar to those in Example 1, by the same procedure as in Example 1 on the surface of the inorganic thin film as the upper layer of the laminated film before the coating of an adhesive resin layer. On the obtained laminated film, an unstretched polypropylene film was laminated in the same manner as in Example 1. The obtained laminated film was subjected to the above-mentioned evaluations. The results are shown in Table 1-2.

Example 7

A laminated film was produced following the procedure of Example 1 except for further coating, the surface of the inorganic thin film as the upper layer of the laminated film, before the coating of an adhesive resin layer, with a solution containing polyvinyl alcohol (PVA, "Gosenol N-300", manufactured by Nippon Synthetic Chemical Industry Co., Ltd., degree of saponification: 98% or more) and silica sol ("snowtex-XS", manufactured by Nissan Chemical Industries, Ltd., average particle diameter; 4 to 6nm) in a mass ratio of 1:1 based on the solid content by a gravure coating method, and drying the resultant to form a 0.2μm thick protection layer. On the obtained laminated film, an unstretched polypropylene film was laminated in the same manner as in Example 1. The resultant laminate was subjected to the above-mentioned evaluations. The results are shown in Table 1-2.

Example 8

An aqueous liquid of a PVA, which was prepared as described below, an aqueous liquid of ethylene-unsaturated carboxylic acid copolymer, and an aqueous silica sol were mixed in a mass ratio of 80:10:10 based on the solid content, thereby obtaining a protection layer coating liquid. A laminated film was prepared following the procedure of Example 1 except that the protection layer coating liquid prepared above was coated by a bar coater to the surface of the inorganic thin film as the upper layer of the laminated film before the coating of an adhesive resin layer in Example 1 in such a manner as that the dry thickness was 0.3μm to thereby form a protection layer, and on the obtained laminated film, an unstretched polypropylene film was laminated in the same manner as in Example 1. The obtained laminated film was subjected to the above-mentioned evaluations. The results are shown in Table 1-2.

<Preparation of PVA aqueous liquid>

An aqueous liquid having a solid content of 10% was prepared using polyvinyl alcohol (PVA, "Gosenol N-300", manufactured by Nippon Synthetic Chemical Industry Co., Ltd., degree of saponification: 98% or more) and ion exchange water.

<Preparation of aqueous liquid of ethylene-unsaturated carboxylic acid copolymer>

An aqueous liquid having a degree of neutralization of 75% and a solid content of 20% was prepared by mixing under stirring an ethylene-acrylic acid copolymer (EAA) (acrylic acid: 20% by weight, MFR: 300 g/10 minutes), ammonia, and ion exchange water at 95°C for 2 hours.

<Preparation of aqueous silica sol>

An aqueous silica sol was prepared in accordance with the description of JP 06-16414 A, paragraphs [0012] to [0031]. More specifically, sodium water glass (JIS No. 3) was dissolved in a sodium nitrate solution, thereby producing a sodium silicate solution. The sodium silicate solution was passed through a hydrogen-type cation exchange resin column, a hydroxyl group-type anion exchange resin column, and again, the hydrogen-type cation exchange resin column in the stated order. After that, a sodium hydroxide solution was added, thereby obtaining a silicic acid solution. Subsequently, 5% amount of silicic acid solution was subjected to vacuum distillation for removing evaporated water, and simultaneously, the remaining silicic acid solution was continuously and gradually supplied for successively performing the vacuum distillation, thereby producing a colloidal silica sol. The colloidal silica sol was passed through a hydrogen-type cation exchange resin column, a hydroxyl group-type anion exchange resin column, and again, the hydrogen-type cation exchange resin column in the stated order. Immediately thereafter, a special grade ammonia solution was added, thereby obtaining an aqueous silica sol in which the pH was 9, the average particle diameter was 20 nm, and the concentration of each of various metal oxides was lower than 500 ppm (reactive functional group, silanol group; proportion: 100 mol%).

Example 9

A laminated film was produced following the procedure of Example 1 except that a mixture obtained by mixing an isocyanate compound ("Coronate L", manufactured by Nippon Polyurethane Industry Co., Ltd.) with a urethane resin ("MITEC NY220A", manufactured by Mitsubishi Chemical Corporation) in a mass ratio of 1:1 was coated and dried to form a 0.5nm thick anchor coat layer as an anchor coat layer between inorganic thin films. The obtained laminated film was subjected to the above-mentioned evaluations. The results are shown in Table 1-2.

Example 10

A laminated film was produced following the procedure of Example 1 except that a mixture obtained by mixing an isocyanate compound ("Coronate L", manufactured by Nippon Polyurethane Industry Co., Ltd.) with an acrylic resin ("PARALOID B66", manufactured by Rohm and Haas Company) in a mass ratio of 1:1 was coated and dried to form a 0.5nm thick anchor coat layer as an anchor coat layer between inorganic thin films. The obtained laminated film was subjected to the above-mentioned evaluations. The results are shown in Table 1-2.

Example 11

A laminated film was produced following the procedure of Example 1 except that a mixture obtained by mixing an isocyanate compound ("Coronate L", manufactured by Nippon Polyurethane Industry Co., Ltd.) with a nitrocellulose resin ("RSI", manufactured by DAICEL CHEMICAL INDUSTRIES, LTD) in a mass ratio of 1:1 was applied and dried to form a 0.5nm thick anchor coat layer as an anchor coat layer between inorganic thin films. The obtained laminated film was subjected to the above-mentioned evaluations. The results are shown in Table 1-2.

Example 12

A laminated film was produced following the procedure of Example 1 except for using, as the anchor coat layer between the inorganic thin film layers, an anchor coat layer on which a 0.1nm thick chromium was formed by performing sputtering under an argon atmosphere of $1 \times 10^{-2}$ Torr using chromium as target with a DC magnetron sputtering system. The obtained laminated film was subjected to the above-mentioned evaluations. The results are shown in Table 1-2.

Example 13

A laminated film was produced following the procedure of Example 1 except for using, as the anchor coat layer between the inorganic thin film layers, a 0.5nm thick $Si_3N_4$ which was formed by introducing silane and ammonia with a plasma CVD device under an argon atmosphere of $1 \times 10^{-2}$ Torr. The obtained laminated film was subjected to the above-mentioned evaluations. The results are shown in Table 1-2.

Example 14

A laminated film was produced following the procedure of Example 1 except for using, as the anchor coat layer between the inorganic thin film layers, a 0.2nm thick $TiO_2$ which was formed by evaporating $TiO_2$ by a high frequency heating process under the vacuum of $1 \times 10^{-5}$ Torr using a vacuum evaporator. The obtained laminated film was subjected to the above-mentioned evaluations. The results are shown in Table 1-2.

Comparative Example 1

A laminated film was produced following the procedure of Example 1 except for forming no anchor coat layer between the inorganic thin film layers and directly forming an inorganic thin film. The obtained laminated film was subjected to the above-mentioned evaluations. The results are shown in Table 1-2.

Comparative Example 2

A laminated film was produced following the procedure of Example 1 except for adjusting the thickness of the anchor coat layer between the inorganic thin film layers to 200nm. The obtained laminated film was subjected to the above-mentioned evaluations. The results are shown in Table 1-2.

[Table 1]

Table 1-1

| | Example 1 | Example 2 ** | Example 3 | Example 4 | Example 5 | Example 6 | Example 7 |
|---|---|---|---|---|---|---|---|
| Laminated constitution | PET/AC/SiO$_x$/AC/SiO$_x$ | PET/AC/SiO$_x$/AC/SiO$_x$ | PET/AC/SiO$_x$/AC/SiO$_x$ | PET/AC/SiO$_x$/AC/SiO$_x$ | PET/SiO$_x$/AC/SiO$_x$ | PET/AC/SiO$_x$/AC/SiO$_x$/AC/SiO$_x$ | PET/AC/SiO$_x$/AC/SiO$_x$/TC |
| AC between thin film layers (nm)* | Polyester (0.5) | Polyester (10) | Polyester + Silane coupling agent 5%, (0.5) | Polyester + Silane coupling agent 50%, (0.5) | Polyester (0.5) | Polyester (0.5) | Polyester (0.5) |
| Protection layer (nm)* | None | None | None | None | None | None | PVA + Silica sol (200) |
| Water vapor permeability (g/m²/day) | 0.12 | 0.15 | 0.10 | 0.15 | 0.20 | 0.07 | 0.05 |
| Adhesion strength (g/15mm) | 480 | 250 | 640 | 680 | 320 | 460 | 520 |

* : The numerical value in brackets indicates the thickness of the AC or the protection layer.
**: Not part of the invention.

[Table 2]

Table 1-2

| | Example 8 | Example 9 | Example 10 | Example 11 | Example 12 | Example 13 | Example 14 | Comparative Example 1 | Comparative Example 2 |
|---|---|---|---|---|---|---|---|---|---|
| Layer constitution | PET/AC/SiO$_x$/ AC/SiO$_x$/TC | PET/AC/SiO$_x$/ AC/SiO$_x$ | PET/AC/SiO$_x$/ AC/SiO$_x$ | PET/AC/SiO$_x$/ AC/SiO$_x$ | PET/AC/SiO$_x$/ AC/SiO$_x$ | PET/AC/SiO$_x$/ AC/SiO$_x$ | PET/AC/SiO$_x$/ AC/SiO$_x$ | PET/AC/SiO$_x$/ SiO$_x$ | PET/AC/SiO$_x$/ AC/SiO$_x$ |
| AC between thin film layers (nm)* | Polyester (0.5) | Urethane (0.5) | Acryl (0.5) | Nitrocellulo se (0.5) | Chronium (0.1) | Si$_3$N$_4$(0.5) | TiO$_2$(0.2) | None | Polyester (200) |
| Protection layer (nm)* | PVA+EMAA+Na$^+$+ Silica sol (200) | None | None | None | None | None | None | None | None |
| Water vapor permeability (g/m$^2$/day) | 0.03 | 0.18 | 0.15 | 0.17 | 0.08 | 0.06 | 0.10 | 0.52 | 0.33 |
| Adhesion strength (g/15mm) | 560 | 580 | 240 | 380 | 650 | 570 | 440 | 580 | 10 |

\* : The numerical value in brackets indicates the thickness of the AC or the protection layer.

INDUSTRIAL APPLICABILITY

The gas barrier laminated film of the present invention is widely used as a wrapping material for articles which requires blocking of various gases such as water vapor and oxygen, for example, wrapping materials for preventing deterioration of food, industrial goods, drugs, and the like. Moreover, besides the wrapping use, the gas barrier laminated film of the present invention can also be suitably used as a transparent electroconductive sheet which is used for liquid crystal display devices, solar cells, electromagnetic wave shields, touch panels, EL substrates, color filters, and the like.

**Claims**

1.   A gas barrier laminated film, comprising, on an inorganic thin film formed on at least one side of a base film, at least one constitutional unit layer containing a 0.1 to 5 nm thick anchor coat layer and an inorganic thin film formed on the anchor coat layer,
wherein the anchor coat layer comprises a polyisocyanate curing agent and at least one resin selected from the group consisting of a polyester-based resin, an urethane-based resin, an acryl-based resin, a nitrocellulose-based resin, a silicon-based resin, and an isocyanate-based resin, or at least one member selected from the group consisting of chromium, a titanium oxide, and a silicon nitride, and wherein the inorganic thin film comprises a silicon oxide or an aluminum oxide.

2.   The laminated film according to claim 1, wherein a number of the constitutional unit layer is one to three.

3.   The laminated film according to claim 1 or 2, wherein the anchor coat layer comprises a silane coupling agent.

4.   The laminated film according to any one of claims 1 to 3, wherein an anchor coat layer is provided between the base film and the inorganic thin film.

5.   The laminated film according to any one of claims 1 to 4, comprising a protection layer as a top layer.

6.   The laminated film according to claim 5, wherein the protection layer comprises a water-soluble resin.

7.   The laminated film according to claim 6, wherein the protection layer comprises at least one resin selected from the group consisting of polyvinyl alcohol, ethylenevinyl alcohol, and an ethylene-unsaturated carboxylic acid copolymer.

8.   A method for producing a gas barrier laminated film, comprising the steps of:

(A) forming an inorganic thin film on at least one side of a base film by a deposition method; and
(B) forming at least one constitutional unit layer which is obtained by successively forming a 0.1 to 5 nm thick anchor coat layer and an inorganic thin film formed by a deposition method on the inorganic thin film,
wherein the anchor coat layer comprises a polyisocyanate curing agent and at least one resin selected from the group consisting of a polyester-based resin, an urethane-based resin, an acryl-based resin, a nitrocellulose-based resin, a silicon-based resin, and an isocyanate-based resin, or at least one member selected from the group consisting of chromium, a titanium oxide, and a silicon nitride, and wherein the inorganic thin film comprises a silicon oxide or an aluminum oxide.

**Patentansprüche**

1.   Laminierter Gasbarrierefilm, umfassend auf einem anorganischen Dünnfilm, der auf mindestens einer Seite eines Basisfilms ausgebildet ist, mindestens eine Aufbaueinheitschicht, enthaltend eine 0,1 bis 5 nm dicke Ankerschicht und einen anorganischen Dünnfilm, der auf der Ankerschicht gebildet ist,
wobei die Ankerschicht ein Polyisocyanat-Härtungsmittel und mindestens ein Harz enthält, das ausgewählt wird aus der aus einem Harz auf Polyesterbasis, einem Harz auf Urethanbasis, einem Harz auf Acrylbasis, einem Harz auf Nitrocellulosebasis, einem Harz auf Siliziumbasis und einem Harz auf Isocyanatbasis bestehenden Gruppe, oder mindestens einen Bestandteil, ausgewählt aus der aus Chrom, einem Titanoxid und einem Siliziumnitrid bestehenden Gruppe, und wobei der anorganische Dünnfilm ein Siliziumdioxid oder ein Aluminiumoxid umfasst.

2.   Laminierter Film nach Anspruch 1, wobei die Anzahl der Aufbaueinheitsschichten 1 bis 3 beträgt.

**3.** Laminierter Film nach Anspruch 1 oder 2, wobei die Ankerschicht ein Silankupplungsmittel umfasst.

**4.** Laminierter Film nach einem der Ansprüche 1 bis 3, wobei eine Ankerschicht zwischen dem Basisfilm und dem anorganischen Dünnfilm vorgesehen ist.

**5.** Laminierter Film nach einem der Ansprüche 1 bis 4, umfassend eine Schutzschicht als oberste Schicht.

**6.** Laminierter Film nach Anspruch 5, wobei die Schutzschicht ein wasserlösliches Harz umfasst.

**7.** Laminierter Film nach Anspruch 6, wobei die Schutzschicht mindestens ein Harz umfasst, das ausgewählt wird aus der aus Polyvinylalkohol, Ethylenvinylalkohol und einem Ethylen-ungesättigten Carbonsäure-Copolymer bestehenden Gruppe.

**8.** Verfahren zur Herstellung eines laminierten Gasbarrierefilms, umfassend die Schritte:

(A) Ausbilden eines anorganischen Dünnfilms auf mindestens einer Seite eines Basisfilms durch eine Abscheidungsmethode; und
(B) Ausbilden mindestens einer Aufbaueinheitsschicht, die erhalten wird durch schrittweise Ausbildung einer 0,1 bis 5 nm dicken Ankerschicht und eines anorganischen Dünnfilms, der durch eine Abscheidungsmethode auf dem anorganischen Dünnfilm ausgebildet wird,
wobei die Ankerschicht ein Polyisocyanat-Härtungsmittel und mindestens ein Harz umfasst, das ausgewählt wird aus der aus einem Harz auf Polyesterbasis, einem Harz auf Urethanbasis, einem Harz auf Acrylbasis, einem Harz auf Nitrocellulosebasis, einem Harz auf Siliziumbasis und einem Harz auf Isocyanatbasis bestehenden Gruppe, oder mindestens einem Bestandteil, der ausgewählt wird aus der aus Chrom, einem Titanoxid und einem Siliziumnitrid bestehenden Gruppe, und wobei der anorganische Dünnfilm ein Siliziumoxid oder ein Aluminiumoxid umfasst.

## Revendications

**1.** Film laminé à barrière de gaz comprenant un film mince inorganique formé sur au moins une côté d'un film de base, au moins une couche d'unité constitutionnelle contenant une couche de revêtement d'ancrage d'une épaisseur de 0,1 à 5 nm et un film mince inorganique formé sur la couche de revêtement d'ancrage,
dans lequel la couche de revêtement d'ancrage comprend un agent de durcissement polyisocyanate et au moins une résine sélectionnée parmi le groupe consistant en une résine à base de polyester, une résine à base d'uréthane, une résine à base d'acryle, une résine à base de nitrocellulose, une résine à base de silicium et une résine à base d'isocyanate ou au moins un membre sélectionné parmi le groupe consistant en du chrome, un oxyde de titane et un nitrure de silicium et dans lequel le film mince inorganique comprend un oxyde de silicium ou un oxyde d'aluminium.

**2.** Film laminé selon la revendication 1, dans lequel le nombre de la couche d'unité constitutionnelle est un à trois.

**3.** Film laminé selon l'une des revendications 1 ou 2, dans lequel la couche de revêtement d'ancrage comprend un agent de couplage silane.

**4.** Film laminé selon l'une des revendications 1 à 3, dans lequel une couche de revêtement d'ancrage est prévue entre le film de base et le film mince inorganique.

**5.** Film laminé selon l'une des revendications 1 à 4 comprenant une couche de protection comme une couche supérieure.

**6.** Film laminé selon la revendication 5, dans lequel la couche de protection comprend une résine soluble dans l'eau.

**7.** Film laminé selon la revendication 6, dans lequel la couche de protection comprend au moins une résine sélectionnée parmi le groupe consistant en un alcool polyvinylique, un alcool èthylènevinylique et un copolymère d'éthylène / acide carboxylique insaturé.

**8.** Procédé de production d'un film laminé à barrière de gaz comprenant les étapes de:

(A) la formation d'un film mince inorganique sur au moins une côté d'un film de base par un procédé de déposition ; et

(B) la formation d'au moins une couche d'unité constitutionnelle qui est obtenue par la formation successive d'une couche de revêtement d'ancrage d'une épaisseur de 0,1 à 5 nm et un film mince inorganique formé par un procédé de déposition sur le film mince inorganique,

dans lequel la couche de revêtement d'ancrage comprend un agent de durcissement polyisocyanate et au moins une résine sélectionnée parmi le groupe consistant en une résine à base de polyester, une résine à base d'uréthane, une résine à base d'acryle, une résine à base de nitrocellulose, une résine à base de silicium et une résine à base d'isocyanate ou au moins un membre sélectionné parmi le groupe consistant en du chrome, un oxyde de titane et un nitrure de silicium et dans lequel le film mince inorganique comprend un oxyde de silicium ou un oxyde d'aluminium.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003071968 A
- JP 2003231202 A
- JP 2004114645 A
- JP 2004345223 A
- JP 6016414 A